# FASCICULE DE BREVET EUROPEEN

(11) **EP 3 535 774 B1**
(45) Date de publication et mention de la délivrance du brevet: **28.10.2020**
(21) Numéro de dépôt: 17793650.7
(22) Date de dépôt: 02.11.2017
(51) Int. Cl.: H01J 35/16, H01B 3/12, C04B 35/10

(54) **ISOLANT ÉLECTRIQUE À BASE DE CÉRAMIQUE D'ALUMINE, PROCÉDÉ DE RÉALISATION DE L'ISOLANT ET TUBE À VIDE COMPRENANT L'ISOLANT**
AUF ALUMINIUMOXID-KERAMIK BASIERENDER ELEKTRISCHER ISOLATOR, VERFAHREN ZUR HERSTELLUNG DES ISOLATORS UND VAKUUMRÖHRE MIT DEM ISOLATOR
ALUMINA-CERAMIC-BASED ELECTRICAL INSULATOR, METHOD FOR PRODUCING THE INSULATOR, AND VACUUM TUBE COMPRISING THE INSULATOR

(30) Priorité: 02.11.2016 FR 1601563
(43) Date de publication de la demande: 11.09.2019
(73) Titulaire: Thales, 92400 Courbevoie (FR)
(72) Inventeur: PONARD, Pascal, 74500 Neuvecelle (FR); BOURAT, Christophe, 74140 Sciez (FR)
(74) Mandataire: Marks & Clerk France
(86) Numéro de dépôt international: PCT/EP2017/078091
(87) Numéro de publication internationale: WO 2018/083194

(56) Documents cités:
- CN-A- 102 086 118
- JP-A- S5 637 274
- JP-A- H02 128 412
- JP-A- 2012 099 435
- US-A1- 2006 138 715
- US-A1- 2015 139 401

## Description

L'invention concerne un isolant électrique à base de céramique d'alumine, un procédé de réalisation de l'isolant et un tube à vide comprenant l'isolant.

Les tubes à vides sont utilisés dans de nombreuses utilisations mettant en œuvre un faisceau d'électrons ou plus généralement un faisceau de particules chargées se déplaçant dans le vide. Les tubes à vide peuvent être utilisés dans le domaine de l'amplification de signaux radio fréquences ou dans la génération de rayons X.

Les tubes à vides comprennent plusieurs électrodes entre lesquelles se propage le faisceau d'électrons. Ces électrodes sont séparées par des isolants électriques par exemple réalisées en céramique à base d'alumine.

Un premier problème rencontré, notamment dans les tubes générateurs de rayons X ou tubes amplificateurs concerne l'accumulation de charges électriques miroirs, c'est-à-dire opposées à celles du faisceau de particule, à la surface de l'alumine ou implantées sur une certaine profondeur sous la surface en fonction de l'énergie des charges. Cette accumulation peut engendrer des relaxations brutales par décharge à l'intérieur du tube, voire la rupture par claquage diélectrique du matériau. Il est par conséquent nécessaire d'écouler localement ces charges dans l'alumine mais sans dégrader le caractère isolant macroscopique du matériau.

Un second problème rencontré dans les tubes générateurs de rayons X ou tubes amplificateurs radiofréquence est que les isolants utilisés généralement en alumine peuvent être soumis à des champs électriques extrêmement élevés. L'isolant nécessite donc une forte rigidité diélectrique. L'alumine peut satisfaire à cette exigence. Il faut cependant veiller à ce que la solution retenue pour l'écoulement des charges ne crée pas une ou plusieurs interfaces entre des couches de permittivités différentes, ce qui pourrait affaiblir significativement la rigidité diélectrique de l'isolant. Cette interférence entre les solutions du premier et du second problèmes n'est malheureusement pas bien traitée dans l'art antérieur.

Un isolant électrique étant formé d'une céramique à base d' alumine est divulgué par exemple par US 2015/139401 A1 et JP 2012 099435 A.

Pour la suite, on s'arrêtera sur les tubes générateurs de rayons X pour illustrer l'intérêt de l'invention mais celle-ci pourrait de la même façon s'appliquer aux isolateurs en alumine utilisés pour supporter les électrodes soumises à différentes hautes tensions dans les collecteurs déprimés des tubes à ondes progressives. Pour les tubes générateurs de rayons X traditionnels constitués d'une enveloppe en verre, la solution consiste à éloigner autant que possible la surface du diélectrique du faisceau d'électrons, d'où la forme très caractéristique de ces tubes. Un dépôt résistif à base d'oxyde de chrome Cr₂O₃ est également mis en œuvre sur la paroi interne de l'enveloppe en verre pour favoriser l'écoulement des charges.

Des tubes générateurs de rayons X plus récents permettent de générer des rayonnements X de plus fortes énergies. En substitution de l'enveloppe verre, ils sont constitués de matériaux métalliques conducteurs, associés à des isolateurs haute tension en céramique d'alumine. L'association par brasage des matériaux métalliques et des isolateurs permet de réaliser l'enveloppe dans laquelle se propage le faisceau d'électrons dans le vide entre l'anode et la cathode.

Un tube appelé mono polaire possède un seul isolant diélectrique en céramique entre l'anode et la cathode et permet de réaliser des tubes générateurs de rayons X dont la haute tension est comprise entre 20 et 250 kV. Pour des tensions supérieures allant de 250 à 600 kV, une configuration dite bipolaire est généralement utilisée. Dans cette configuration deux isolants sont mis en œuvre et chacun supporte la moitié de la haute tension totale. Afin de limiter les effets de charges miroirs ou implantées dans l'alumine plusieurs solutions ont été mises en œuvre.

Des tubes ont été conçus en éloignant au maximum les isolants en alumine et le faisceau d'électrons. Ce type de conception se fait au détriment de la compacité du tube.

On a aussi tenté de placer des écrans conducteurs équipotentiels de protection entre les isolants en alumine et le faisceau d'électrons. De tels écrans augmentent les dimensions des tubes et réduisent la tenue en tension par claquage.

Des géométries particulières de céramique ont été développées comme par exemple décrites dans le document EP 1 537 594 B1. La géométrie particulière de la céramique permet de limiter les problèmes d'implantation de charges par un phénomène d'équilibre électrostatique par lequel le champ créé par les charges accumulées en surface viendrait annihiler le phénomène d'émission électronique. Ce mécanisme d'équilibre nécessite une céramique parfaitement isolante et non contaminée par le moindre dépôt sous vide légèrement conducteur. En fonctionnement, on a constaté qu'après la survenue de quelques arcs, des dépôts contaminants se faisaient à la surface des isolants en céramique limitant l'efficacité de cet équilibre électrostatique. De plus, la géométrie particulière des céramiques ne règle pas le problème d'interaction coulombienne à plus grande distance avec le faisceau d'électron entraînant des charges miroirs.

Enfin, le document US 3,729,575 décrit la mise en œuvre d'un dépôt conducteur sur la surface d'un isolant en céramique d'alumine. Ce dépôt permet un écoulement des charges. Les céramiques classiques présentent un taux d'alumine dont la pureté est de l'ordre de 99,5% et le procédé décrit dans ce document conduit à une couche superficielle dont les propriétés électriques restent difficiles à maîtriser mettant en œuvre un mécanisme de conduction principalement localisé dans la couche et pouvant créer une forte différence de permittivité localisée à l'interface entre la couche superficielle et l'alumine.

Le document US 3,729,575 décrit la présence d'un film résistif fondu en surface de l'alumine. Ce film est suffisamment épais, de l'ordre 50µm (ou de 0.002 pouce) pour pouvoir écouler des charges de surface mais également des électrons de fortes énergies implantés dans l'alumine. Ce dépôt présente une résistivité de 3.10⁸ à 1.10¹³ Ohms par carré.

Cette solution proposée, basée sur un dépôt d'oxydes métalliques fondus à la surface de l'alumine, n'est pas satisfaisante car le procédé de fabrication d'une couche fondue en surface va créer une interface entre deux couches présentant des permittivités relatives différentes : 9,6 pour l'alumine et une valeur 3 à 4 fois supérieure pour la couche fondue d'oxydes métalliques partiellement réduits. On rappelle que la permittivité relative d'un diélectrique parfait est de 1 (vide, air...). Cette permittivité croit vers l'infini avec le caractère conducteur du matériau.

Les équations de passage entre deux milieux diélectriques découlant du théorème de Gauss pour le champ électrique E montrent une singularité à l'interface sur la composante normale du champ à la surface. A l'interface entre des couches de permittivités différentes, une amplification locale du champ électrique apparait. Ceci peut engendrer une rupture diélectrique du matériau due à l'amplification localisée du champ électrique E.

Ce cas de figure est particulièrement pénalisant pour les tubes générateurs de rayons X dans lesquels les gradients de champ électrique dans l'isolant en alumine sont déjà particulièrement élevés localement, de l'ordre de 20 MV/m pour une rigidité diélectrique typique de l'alumine fritté de 25 MV/m.

L'invention vise à pallier tout ou partie des problèmes cités plus haut en proposant un isolant et un tube réalisé avec cet isolant ne nécessitant ni géométrie particulière ni écran électrostatique particulier. L'invention permet le drainage de charges susceptibles de se déposer à la surface des isolants. L'invention permet d'éviter toute rupture de permittivité entre la surface de l'isolant traitée pour drainer les charges et la profondeur de l'isolant lui-même.

Contrairement à l'art antérieur, l'invention n'utilise pas de céramique dont l'alumine serait d'une grande pureté, de l'ordre de 99,5% et présentant les meilleures rigidités diélectriques. Au contraire l'invention propose de mettre en œuvre une céramique possédant des impuretés en phase vitreuse permettant la diffusion d'une couche de drainage de charges déposée en surface.

Plus précisément, l'invention a pour objet un isolant électrique destiné à isoler au moins une électrode d'un tube à vide dans lequel circule un faisceau de particules chargées, l'isolant étant formé d'une céramique à base d'alumine, caractérisé en ce que la céramique est formée d'un matériau poly cristallin entre les joints duquel une phase vitreuse comprise entre 2% et 8% en masse est présente, dans laquelle au moins un oxyde métallique est diffusé à partir d'une face de l'isolant, la concentration en oxyde métallique décroissant progressivement au fur et à mesure que l'on s'éloigne de la face.

Dans l'art antérieur, pour réaliser un isolant d'un tube à vide, comme ceux assurant la génération de rayonnement X où les champs électriques sont importants, on met plutôt en œuvre une céramique très pure sans phase vitreuse présentant un taux d'alumine de 98% à 99.6% car celles-ci présentent les meilleures rigidités diélectriques. Ce faible taux de phase vitreuse dans l'alumine ne favorise pas la diffusion des oxydes métalliques déposés en surface, une phase fondue ne diffusant que sur des épaisseurs de 50 à 100µm dans l'alumine apparaît en surface comme décrit dans le document US 3,729,575. Contrairement à cela dans l'invention, on utilise de l'alumine dont le taux de phase vitreuse inter granulaire est bien plus élevé afin de favoriser la diffusion en profondeur des oxydes métalliques déposés en surface.

La diffusion, dans des conditions d'atmosphères contrôlées, de ou des oxydes métalliques sous la face de l'isolant à l'intérieur de celui-ci permet d'obtenir un gradient de propriétés électriques en fonction de la profondeur par rapport à la face, notamment une évolution de la permittivité électrique suivant une fonction monotone de la profondeur.

Cette fonction monotone permet ne pas dégrader localement la rigidité diélectrique de l'alumine, contrairement aux observations faites sur des réalisations selon l'enseignement du document US 3,729,575.

Plus précisément, le matériau présente une variation continue de résistance électrique et une variation continue de permittivité diélectrique de la face vers une profondeur de l'isolant où l'au moins un oxyde métallique n'est pas diffusé dans la phase vitreuse inter granulaire

Avantageusement, la phase vitreuse est comprise entre 5% et 7% en masse et idéalement 6%.

Avantageusement, la phase vitreuse comprend un ou plusieurs composés de type alcalino-terreux mélangés avec des charges comprenant au moins un élément du groupe formé par la silice et le zircone.

Le au moins un oxyde métallique peut comprendre un oxyde de chrome et un oxyde de titane.

L'isolant électrique peut être de forme tubulaire et la face à partir de laquelle l'au moins un oxyde métallique est diffusé est une face interne de la forme tubulaire. D'autres formes d'isolant sont également possibles, comme par exemple une forme conique ou cylindrique

L'invention a aussi pour obiet un tube à vide comprenant un isolant électrique selon l'invention et au moins une électrode isolée par l'isolant électrique.

Le tube est par exemple un tube générateur de rayonnement X ou un tube amplificateur radiofréquence.

L'invention a également pour objet un procédé de réalisation d'un isolant électrique selon l'invention. Le procédé comprend une première étape de dépôt de l'au moins un oxyde métallique en solution dans un solvant sur la face de l'isolant suivie d'une seconde étape de traitement thermique de l'isolant permettant la diffusion de l'au moins un oxyde métallique dans la phase vitreuse de la céramique.

Avantageusement, durant la seconde étape, on enchaine des périodes avec une atmosphère réductrice et des périodes avec une atmosphère plus oxydante afin de favoriser une réduction partielle des oxydes métalliques.

Avantageusement, avant la seconde étape de traitement thermique, l'alumine est sous stœchiométrique en oxygène.

Avantageusement, dans un tube à vide avant une électrode isolée par l'isolant, l'isolant électrique est en partie recouvert par une première métallisation en contact électrique avec l'électrode, et le dépôt recouvre en partie la première métallisation.

Avantageusement, l'isolant électrique est en partie recouvert par une seconde métallisation disposée sur la première métallisation y compris sur la partie de la première métallisation recouverte par le dépôt.

L'invention sera mieux comprise et d'autres avantages apparaîtront à la lecture de la description détaillée d'un mode de réalisation donné à titre d'exemple, description illustrée par le dessin joint dans lequel :
la figure 1 représente un exemple de tube à vide générateur de rayonnement X selon l'invention ;
la figure 2 représente en coupe partielle, un isolant mis en œuvre dans un tube à vide selon l'invention ;
la figure 3a représente deux courbes montrant des concentrations en phase vitreuse et en oxydes métalliques et/ou en métal réduit en fonction de la profondeur par rapport à une face de l'isolant ; la figure 3b représente la répartition de concentration de deux oxydes et/ou métaux réduits différents ;
la figure 4 représente une partie de l'isolant à l'interface avec une électrode du tube.

Par souci de clarté, les mêmes éléments porteront les mêmes repères dans les différentes figures.

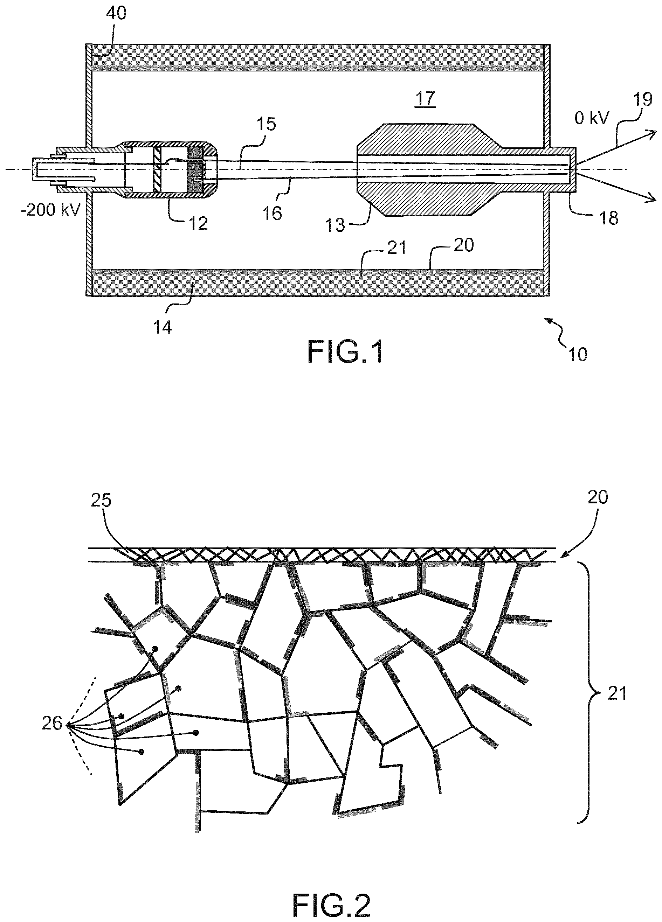

La figure 1 représente schématiquement un tube à vide 10 générateur de rayonnement X. Il est bien entendu que l'invention n'est pas limitée à un tube générateur de rayonnement X. L'invention peut être mise en œuvre dans tout autre type de tube à vide, par exemple ceux destinés à l'amplification de signaux radio fréquence tel que par exemple un tube à ondes progressives ou un klystron.

Le tube à vide 10 comprend une anode 12 et une cathode 13 séparées par un isolant 14 de forme tubulaire s'étendant selon un axe 15. Un faisceau d'électrons 16 se propage selon l'axe 15 entre l'anode 12 et la cathode 13 à l'intérieur d'une cavité 17 formée à l'intérieur de la forme tubulaire de l'isolant 14. La cavité 17 est fermée par l'anode 12 d'une part et par la cathode 13 d'autre part. La cathode 13 comprend une cible 18 transformant l'énergie des électrons reçus du faisceau d'électrons 16 en rayonnement X 19. Une différence de potentiel de 200 kV est appliquée entre l'anode 12 et la cathode 13.

La figure 1 représente une configuration de tube mono polaire dont le maximum de différence de potentiel est inférieur à 300 kV. Au-delà, d'autres configurations sont envisageables dans lesquelles l'invention peut aussi être mise en œuvre. Par exemple dans une configuration bipolaire, la différence de potentiel peut aller jusqu'à 450kV, voire 600kV, l'enveloppe externe est métallique et des isolants céramiques sont disposés entre cette enveloppe externe cylindrique et les anode et cathode portées chacune à une polarité égale en valeur absolue. L'invention peut être mise en œuvre pour chacun des isolants. Chaque isolant isole son électrode associée de l'enveloppe métallique.

L'isolant 14 est formé d'une céramique à base d'alumine. A partir de sa face interne 20, un oxyde métallique est diffusé dans l'alumine. Sur la figure 1, une zone 21 de la céramique est représentée à partir de la face interne 20. L'oxyde métallique est diffusé dans la zone 21. En pratique, il n'y a pas de frontière précise entre la zone 21 et le reste de l'isolant 14. L'oxyde métallique est diffusé de façon progressive dans la zone 21. La concentration en oxyde métallique décroit progressivement au fur et à mesure que l'on s'éloigne de la face 20 et que l'on s'enfonce dans la céramique 21. Cette progressivité sans rupture de la concentration en oxyde est importante pour éviter une rupture de permittivité entre la face 20 qui est traitée pour évacuer d'éventuelles charges pouvant s'y déposer et l'intérieur de la céramique. La résistivité de la céramique augmente également progressivement sans rupture à partir de sa face 20.

Pour obtenir ce gradient sans rupture de la concentration en oxyde métallique, une céramique particulière est nécessaire. Cette céramique à base d'alumine comprend une phase vitreuse comprise entre 2% et 8% en masse. C'est dans cette phase vitreuse que l'oxyde métallique est diffusé.

La céramique à base d'alumine est un matériau essentiellement poly cristallin et dans les joints entre les grains cristallins peut se créer une phase vitreuse, c'est-à-dire non cristalline ou amorphe. Dans la phase cristalline, les atomes ou composés sont ordonnés de façon régulière contrairement à la phase vitreuse où les atomes ou composés sont répartis de façon désordonnée. La céramique est par exemple réalisée par frittage de grains d'alumine. Lors de la cuisson permettant le frittage, la phase vitreuse se liquéfie ou tout au moins devient visqueuse et se distribue aux joints de grains d'alumine.

La phase vitreuse comprend par exemple un ou plusieurs composés de type alcalino-terreux mélangés avec des charges. Parmi les composés de type alcalino-terreux, on trouve notamment de l'oxyde de magnésium, MgO, de l'oxyde de calcium, CaO, de l'oxyde de sodium, Na₂O et de l'oxyde de potassium, K₂O. Parmi les charges, on trouve notamment de la silice, SiO₂ et du Zircone, ZrO₂. Cette composition joue un rôle dans la formation de la phase liquide lors du frittage et détermine la température de densification par frittage des alumines mais également les phénomènes de diffusion de la phase vitreuse sur les alumines frittées.

En choisissant un grade d'alumine particulier comprenant un pourcentage massique de phase vitreuse compris entre 2% et 8%, la diffusion des oxydes métalliques se fait correctement. Pour un pourcentage de phase vitreuse inférieur à 2%, les propriétés électriques et les profondeurs de diffusion inter granulaires des oxydes déposés en surface sont trop faibles et difficilement reproductibles. Pour un pourcentage de phase vitreuse supérieur à 8%, les températures de frittage sont de plus en plus basses et les propriétés des céramiques d'alumine sont dégradées notamment sa rigidité diélectrique, ce qui n'est pas souhaitable pour les isolants de tubes générateurs de rayons X. La meilleure diffusion est obtenue pour un grade d'alumine dont la phase vitreuse est comprise entre 5% et 7% en masse et idéalement 6%.

Différents oxydes métalliques peuvent être retenus pour être diffusés dans la phase vitreuse de l'alumine. Il est possible de mettre en œuvre un seul oxyde. Il est également possible de combiner plusieurs oxydes comme par exemple un oxyde de chrome, Cr₂O₃ et un oxyde de titane, Ti0₂. D'autres oxydes sont possibles comme par exemple un oxyde de vanadium, VO, V₂O₃..., un oxyde de zirconium ZrO₂...

Le potentiel électrochimique du chrome et du titane étant supérieur à celui de l'aluminium, les oxydes correspondants auront tendance à être partiellement réduits une fois diffusé dans la matrice d'alumine si celle-ci contient quelques atomes d'aluminium non oxydés, autrement dit si l'alumine est sous stœchiométrique en oxygène. La présence de titane et de chrome sous forme métallique permet de modifier les propriétés électriques de l'isolant. La diffusion progressive permet d'obtenir un gradient de concentration de ces éléments métalliques le plus étalé possible pour éviter les phénomènes d'amplification localisé du champ électrique dans la matrice d'alumine ainsi modifiée.

La figure 2 représente en coupe partielle, la zone 21 de l'isolant 14. Au niveau de la face 20, un film résiduel 25 est constitué d'oxydes métalliques enrichi en phase vitreuse. Lors du traitement thermique de l'isolant permettant de réaliser la diffusion des oxydes métalliques dans la zone 21, la phase vitreuse de l'alumine tend à diffuser à l'inverse, c'est à dire vers la face 20, d'où l'enrichissement du film résiduel 25 en phase vitreuse. Dans la zone 21, des grains d'alumines cristallins 26 sont représentés. La phase vitreuse de l'alumine entoure les grains 26. La diffusion des oxydes métalliques et éventuellement de métaux obtenus après réduction des oxydes est représentée en zones grisées entourant chacun des grains 26. A proximité immédiate de la face 20, la diffusion est quasi complète autour de chaque grain 26. A mesure que l'on s'éloigne de la face 20, le taux de diffusion décroit.

Pour réaliser cette diffusion deux étapes sont réalisées : une première étape de dépôt d'au moins un oxyde métallique en solution dans un solvant sur la face 20 suivie d'une seconde étape de traitement thermique de l'isolant 14 permettant la diffusion de ou des oxydes métalliques dans la phase vitreuse de la céramique. Le dépôt est par exemple réalisé en pulvérisation. Pour faciliter ce dépôt, il est possible d'utiliser un solvant organique. Le traitement thermique est par exemple une cuisson de l'isolant à une température comprise entre 1450°C et 1520°C.

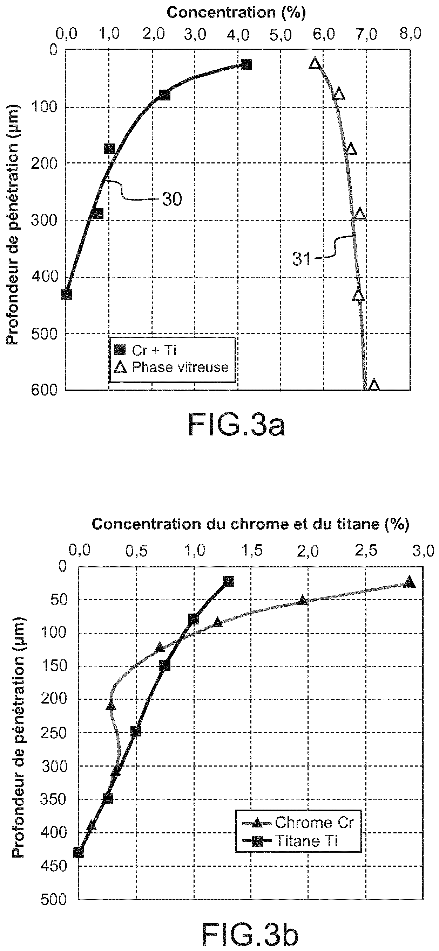

La figure 3a représente deux courbes montrant des concentrations en fonction de la profondeur par rapport à la face 20. Les profondeurs sont exprimées en µm et les concentrations sont exprimées en pourcentage massique. Une première courbe 30 représente la concentration en oxydes métalliques et/ou en métal réduit, ici en chrome et en titane. Au voisinage immédiat de la face 20, la concentration en chrome et en titane est de l'ordre de 4%. A une profondeur voisine de 450 µm, la concentration en chrome et en titane devient nulle. Entre ces deux extrêmes la courbe 30 ne subit aucune rupture et décroit régulièrement à mesure que la profondeur s'accroit.

Une seconde courbe 31 représente la concentration en phase vitreuse. A une profondeur de 600µm la concentration en phase vitreuse est de l'ordre de 7%. Cette concentration décroit jusqu'à atteindre un peu moins de 6% au voisinage immédiat de la face 20. Cette réduction de concentration en phase vitreuse est due au traitement thermique mis en œuvre pour la diffusion. En même temps que la diffusion du chrome et du titane s'opère vers la profondeur de l'isolant, une légère diffusion inverse de la phase vitreuse s'opère vers la face 20.

La figure 3b représente la répartition en concentration de deux oxydes et/ou métaux réduits différents toujours en fonction de la profondeur par rapport à la face 20. On constate que les deux métaux, chrome et titane diffusent différemment en fonction de la profondeur.

Le gradient de concentration obtenu permet d'obtenir le gradient de propriétés électriques. Autrement dit, l'isolant présente une variation continue de résistance électrique de la face 20 vers une profondeur de l'isolant où l'au moins un oxyde métallique n'est pas diffusé. La résistance moyenne pour l'épaisseur de la zone d'alumine modifiée par la diffusion conjointe de chrome et de titane est comprise entre 1.10¹¹ Ohms par carré à 1.10¹³ Ohms par carré.

De même l'isolant présente une variation continue de permittivité diélectrique de la face 20 vers une profondeur de l'isolant où l'au moins un oxyde métallique n'est pas diffusé. La permittivité varie de 9,6 pour l'alumine et croit progressivement vers 25 à 30 vers la face 20 suivant le gradient de résistance sur l'épaisseur où varie la concentration.

Les oxydes métalliques sont diffusés jusqu'à une profondeur de l'ordre de 500µm par rapport à la face 20. Au delà les oxydes métalliques ne sont pas diffusés. Dans la profondeur où les oxydes métalliques sont diffusés, les propriétés électriques (résistance et permittivité diélectrique) varient de façon continue en fonction de la profondeur et sans à-coup. Au-delà des 500µm, on retrouve les propriétés électriques intrinsèques de l'alumine. Au passage de la zone de la céramique où les oxydes métalliques sont diffusés vers la zone de la céramique où les oxydes métalliques ne sont plus diffusés, on observe aussi une variation continue des propriétés électriques.

Les courbes 3a et 3b sont issues d'essais réalisés avec une durée de traitement thermique donnée pour une concentration initiale d'oxyde métallique donnée. D'autres essais ont montré que la maîtrise de la profondeur de diffusion est essentiellement dépendante de la température et de la durée du traitement thermique opéré pour la diffusion.

On a constaté par ailleurs que lors de l'utilisation d'un tube à vide, la pénétration d'électrons dans l'alumine est fonction de l'énergie des électrons du faisceau. Par exemple pour un tube à vide générateur de rayonnement X fonctionnant avec une différence de potentiel de 200kV, la pénétration des élections est de l'ordre de 200µm alors que pour une différence de potentiel de 450kV, la pénétration des élections est de l'ordre de 500µm. La profondeur de diffusion est réglée en fonction de l'utilisation du tube à vide afin de drainer au mieux les électrons pénétrant dans l'isolant sous la face 20.

La quantité des éléments chrome et titane diffusés dans l'épaisseur suite à un traitement thermique est à l'origine de l'écoulement des charges dans l'alumine. La valeur de la résistance moyenne de la couche d'alumine modifiée dépend de la quantité d'oxydes métalliques déposée en surface. La résistance moyenne dépend aussi d'une réduction partielle des oxydes métalliques. Cette réduction peut déjà être obtenue, au moins en partie, grâce à de l'alumine qui peut être légèrement sous stœchiométrique, c'est-à-dire en légère carence d'oxygène. L'alumine tend alors à récupérer des atomes d'oxygène appartenant aux oxydes métalliques et ainsi à les réduire.

Alternativement ou en complément à la mise en œuvre d'alumine sous stœchiométrique en oxygène, durant le traitement thermique, il est possible d'enchainer des périodes avec une atmosphère réductrice par exemple en diffusant de l'hydrogène sec et des périodes avec une atmosphère plus oxydante par exemple en diffusant de l'hydrogène humide. Cet enchainement permet également de maitriser la réduction partielle des oxydes métalliques isolants en éléments métalliques conducteurs dans la matrice d'alumine.

La conduction électrique de l'isolant est pour partie due à la présence des éléments métalliques chrome et titane dispersés dans la phase vitreuse et aux joints de grains et pour partie d'origine ionique.

Concernant la conduction à caractère métallique, le titane peut se trouver sous plusieurs états d'oxydation. Comme de nombreux métaux de transition, il possède différents degrés d'oxydation comme par exemple le monoxyde de titane TiO, le trioxyde de dititane Ti₂O₃, le dioxyde de titane TiO₂ qui peuvent être facilement réduits. En choisissant de l'alumine sous stœchiométrique en oxygène, par exemple de type Al₂O_{(3-X)}, on peut retrouver du titane métallique par réduction partielle du Ti0₂ en un oxyde inférieur et saturation de l'alumine en oxyde suivant. Le trioxyde de dititane Ti₂O₃ peut à son tour être réduit suivant une autre relation :

Al₂O_{(3-X)} + 3 TiO₂ ==> Ti + Ti₂O₃ + Al₂O₃ + (3-x)/2 O²⁻

Concernant une conduction d'origine ionique, le titane tétravalent présente un rayon atomique voisin de celui de l'aluminium trivalent, ce dernier peut par conséquent former un anion du type TiAlO₃⁺ par substitution d'un atome d'aluminium dans l'alumine Al₂O₃.

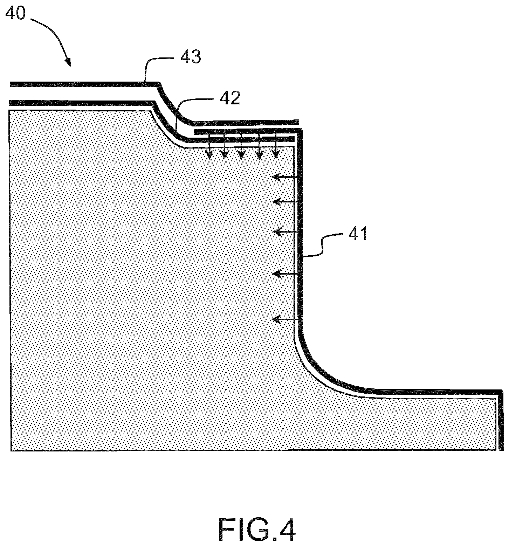

Dans le tube représenté sur la figure 1, les charges collectées dans la zone 21 s'écoulent principalement vers l'anode 12. L'isolant 14 possède une face 40 en contact électrique avec l'anode 12. La face 40 est métallisée pour assurée ce contact. Afin d'assurer une parfaite continuité dans l'écoulement des charges entre la métallisation et le dépôt 41 diffué dans la zone 21, la métallisation et le dépôt se recouvrent partiellement. Ce recouvrement partiel est illustré sur la figure 4. Plus précisément, l'isolant électrique 14 est en partie recouvert par une première métallisation 42. Le dépôt 41 recouvre en partie cette première métallisation 42.

Il est possible d'ajouter une seconde métallisation 43 disposée sur la première métallisation 42 y compris sur la partie de la première métallisation 42 recouverte par le dépôt 41.

Cet enchainement d'une métallisation suivie du dépôt et enfin d'une autre métallisation permet de réaliser un sandwich des couches assurant une bonne évacuation des charges drainées par la zone 21.

## Revendications

1. Isolant électrique (14) destiné à isoler au moins une électrode (12, 13) d'un tube à vide (10) dans lequel circule un faisceau de particules chargées (16), l'isolant électrique (14) étant formé d'une céramique à base d'alumine, **caractérisé en ce que** la céramique est formée d'un matériau poly cristallin entre les joints duquel une phase vitreuse comprise entre 2% et 8% en masse est présente et dans laquelle au moins un oxyde métallique est diffusé à partir d'une face (20) de l'isolant électrique (14), la concentration en oxyde métallique décroissant progressivement au fur et à mesure que l'on s'éloigne de la face (20).

2. Isolant électrique selon la revendication 1, **caractérisé en ce qu'**il présente une variation continue de résistance électrique et une variation continue de permittivité diélectrique de la face (20) vers une profondeur de l'isolant où l'au moins un oxyde métallique n'est pas diffusé.

3. Isolant électrique selon l'une des revendications précédentes, **caractérisé en ce que** la phase vitreuse est comprise entre 5% et 7% en masse.

4. Isolant électrique selon l'une des revendications précédentes, **caractérisé en ce que** la phase vitreuse comprend un ou plusieurs composés de type alcalino-terreux mélangés avec des charges comprenant au moins un élément du groupe formé par la silice et le zircone.

5. Isolant électrique selon l'une des revendications précédentes, **caractérisé en ce que** le au moins un oxyde métallique comprend un oxyde de chrome et un oxyde de titane.

6. Isolant électrique selon l'une des revendications précédentes, **caractérisé en ce que** l'isolant électrique (14) est de forme tubulaire et **en ce que** la face (20) à partir de laquelle l'au moins un oxyde métallique est diffusé est une face interne de la forme tubulaire.

7. Tube à vide **caractérisé en ce qu'**il comprend un isolant électrique (14) selon l'une des revendications 1 à 5. et au moins une électrode (12, 13) isolée par l'isolant électrique (14).

8. Tube à vide selon la revendication 7, **caractérisé en ce que** le tube est un générateur de rayons X.

9. Tube à vide selon la revendication 7, **caractérisé en ce que** le tube est un amplificateur radiofréquence.

10. Procédé de réalisation d'un isolant électrique selon l'une des revendications 1 à 6, **caractérisé en ce qu'**il comprend une première étape de dépôt de l'au moins un oxyde métallique en solution dans un solvant sur la face de l'isolant suivie d'une seconde étape de traitement thermique de l'isolant permettant la diffusion de l'au moins un oxyde métallique dans la phase vitreuse de la céramique.

11. Procédé de réalisation d'un isolant électrique selon la revendication 10, **caractérisé en ce que** durant la seconde étape, on enchaine des périodes avec une atmosphère réductrice et des périodes avec une atmosphère plus oxydante.

12. Procédé de réalisation d'un isolant électrique selon la revendication 10, **caractérisé en ce qu'**avant la seconde étape de traitement thermique, l'alumine est sous stœchiométrique en oxygène.

13. Procédé de réalisation d'un isolant électrique selon la-l'une des revendications 10 à 12, **caractérisé en ce que** l'isolant électrique (14) est destiné à isoler une électrode(12, 13) d'un tube à vide, **en ce que** l'isolant électrique (14) est en partie recouvert par une première métallisation (42) destinée à venir en contact électrique avec l'électrode (12, 13), et **en ce que** le dépôt (41) recouvre en partie la première métallisation (42).

14. Procédé de réalisation d'un isolant électrique selon la revendication 13, **caractérisé en ce que** l'isolant électrique (14) est en partie recouvert par une seconde métallisation (43) disposée sur la première métallisation (42) y compris sur la partie de la première métallisation (42) recouverte par le dépôt (41).

## Patentansprüche

1. Elektrischer Isolator (14), dazu bestimmt, mindestens eine Elektrode (12, 13) einer Vakuumröhre (10) zu isolieren, in welcher ein Strahl mit geladenen Partikeln (16) zirkuliert, wobei der elektrische Isolator (14) aus einer auf Aluminiumoxid basierenden Keramik gebildet ist, **dadurch gekennzeichnet, dass** die Keramik aus einem polykristallinen Material gebildet ist, zwischen dessen Zwischenräumen 2 bis 8 Gewichtsprozent einer glasigen Phase vorhanden sind, und wobei mindestens ein Metalloxid von einer ersten Seite (20) des elektrischen Isolators (14) diffundiert wird, wobei die Konzentration an Metalloxid progressiv mit zunehmender Entfernung von der Seite (20) abnimmt.

2. Elektrischer Isolator nach Anspruch 1, **dadurch gekennzeichnet, dass** er eine kontinuierliche Variation des elektrischen Widerstandes und eine kontinuierliche Variation der dielektrischen Permittivität der Seite (20) in Richtung einer Tiefe des Isolators aufweist, wo das mindestens eine Metalloxid nicht diffundiert wird.

3. Elektrischer Isolator nach einem der vorhergehenden Ansprüche, **dadurch gekennzeichnet, dass** die glasige Phase zwischen 5 und 7 Gewichtsprozent beträgt.

4. Elektrischer Isolator nach einem der vorhergehenden Ansprüche, **dadurch gekennzeichnet, dass** die glasige Phase eine oder mehrere Erdalkaliverbindungen beinhaltet, gemischt mit Füllstoffen, welche mindestens ein Element der Gruppe gebildet aus Silizium und Zirkon beinhalten.

5. Elektrischer Isolator nach einem der vorhergehenden Ansprüche, **dadurch gekennzeichnet, dass** das mindestens eine Metalloxid ein Chromoxid und ein Titanoxid beinhaltet.

6. Elektrischer Isolator nach einem der vorhergehenden Ansprüche, **dadurch gekennzeichnet, dass** der elektrische Isolator (14) eine Röhrenform aufweist und dass die Seite (20), von welcher aus das mindestens eine Metalloxid diffundiert wird, eine Innenseite der Röhrenform ist.

7. Vakuumröhre, **dadurch gekennzeichnet, dass** sie einen elektrischen Isolator (14) nach einem der Ansprüche 1 bis 5 und mindestens eine Elektrode (12, 13) beinhaltet, welche durch den elektrischen Isolator (14) isoliert wird.

8. Vakuumröhre nach Anspruch 7, **dadurch gekennzeichnet, dass** die Röhre ein Röntgenstrahlengenerator ist.

9. Vakuumröhre nach Anspruch 7, **dadurch gekennzeichnet, dass** die Röhre ein Hochfrequenzverstärker ist.

10. Verfahren zur Herstellung eines elektrischen Isolators nach einem der Ansprüche 1 bis 6, **dadurch gekennzeichnet, dass** er einen ersten Schritt der Ablagerung des mindestens einen Metalloxids in Lösung in einem Lösemittel auf der Seite des Isolators beinhaltet, gefolgt von einem zweiten Schritt der Wärmebehandlung des Isolators, welcher die Diffusion des mindestens einen Metalloxids in der glasigen Phase der Keramik ermöglicht.

11. Verfahren zur Herstellung eines elektrischen Isolators nach Anspruch 10, **dadurch gekennzeichnet, dass** man im Zuge des zweiten Schrittes Zeiträume mit einer Reduktionsatmosphäre und Zeiträume mit einer stärker oxidierenden Atmosphäre aneinanderreiht.

12. Verfahren zur Herstellung eines elektrischen Isolators nach Anspruch 10, **dadurch gekennzeichnet, dass** vor dem zweiten Schritt der Wärmebehandlung das Aluminiumoxid unterstöchiometrisch in Sauerstoff vorliegt.

13. Verfahren zur Herstellung eines elektrischen Isolators nach einem der Ansprüche 10 bis 12, **dadurch gekennzeichnet, dass** der elektrische Isolator (14) zum Isolieren einer Elektrode (12, 13) einer Vakuumröhre bestimmt ist, und dadurch, dass der elektrische Isolator (14) teilweise durch eine erste Metallisierung (42) bedeckt ist, welche dazu bestimmt ist, mit der Elektrode (12, 13) in Kontakt zu gehen, dadurch, dass die Ablagerung (41) die erste Metallisierung (42) teilweise bedeckt.

14. Verfahren zur Herstellung eines elektrischen Isolators nach Anspruch 13, **dadurch gekennzeichnet, dass** der elektrische Isolator (14) teilweise durch eine zweite Metallisierung (43) bedeckt ist, welche auf der ersten Metallisierung (42) angeordnet ist, einschließlich auf dem durch die Ablagerung (41) bedeckten Teil der ersten Metallisierung (42).

## Claims

1. An electrical insulator (14) intended for insulating at least one electrode (12, 13) of a vacuum tube (10), in which a charged particle beam (16) circulates, the electrical insulator (14) being formed by an alumina-based ceramic, **characterised in that** the ceramic is formed by a polycrystalline material, between whose joints a vitreous phase of between 2% and 8% by weight is present and at least one metal oxide being diffused therein from a side (20) of the electrical insulator (14), the metal oxide concentration gradually decreasing as one is moving away from the side (20).

2. The electrical insulator according to claim 1, **characterised in that** it has a continuous variation of electrical resistance and a continuous variation of dielectric permittivity of the side (20) towards a depth of the insulator where the at least one metal oxide is not diffused.

3. The electrical insulator according to any one of the preceding claims, **characterised in that** the vitreous phase is between 5% and 7% by weight.

4. The electrical insulator according to any one of the preceding claims, **characterised in that** the vitreous phase comprises one or more alkaline-earth type compounds mixed with fillers comprising at least one element from the group formed by silica and zirconia.

5. The electrical insulator according to any one of the preceding claims, **characterised in that** the at least one metal oxide comprises a chromium oxide and a titanium oxide.

6. The electrical insulator according to any one of the preceding claims, **characterised in that** the electrical insulator (14) is tubular shaped and **in that** the side (20) from which the at least one metal oxide is diffused is an internal side of the tubular shape.

7. A vacuum tube, **characterised in that** it comprises an electrical insulator (14) according to any one of claims 1 to 5, and at least one electrode (12, 13) insulated by the electrical insulator (14).

8. The vacuum tube according to claim 7, **characterised in that** the tube is an X-ray generator.

9. The vacuum tube according to claim 7, **characterised in that** the tube is a radiofrequency amplifier.

10. A method for producing an electrical insulator according to any one of claims 1 to 6, **characterised in that** it comprises a first step of depositing the at least one metal oxide in solution in a solvent on the side of the insulator, followed by a second step of heat treating the insulator, allowing the at least one metal oxide to diffuse into the vitreous phase of the ceramic.

11. The method for producing an electrical insulator according to claim 10, **characterised in that**, during the second step, periods with a reducing atmosphere and periods with a more oxidising atmosphere follow one another.

12. The method for producing an electrical insulator according to claim 10, **characterised in that**, before the second heat treatment step, the alumina is substoichiometric with respect to oxygen.

13. The method for producing an electrical insulator according to any one of claims 10 to 12, **characterised in that** the electrical insulator (14) is intended to insulate an electrode (12, 13) of a vacuum tube, **in that** the electrical insulator (14) is partly covered by a first metallisation (42) intended to come into electrical contact with the electrode (12, 13), and **in that** the deposit (41) partly covers the first metallisation (42).

14. The method for producing an electrical insulator according to claim 13, **characterised in that** the electrical insulator (14) is partly covered by a second metallisation (43) disposed on the first metallisation (42), including on the part of the first metallisation (42) covered by the deposit.
